# EUROPÄISCHE PATENTSCHRIFT

(11) **EP 2 359 097 B1**
(45) Veröffentlichungstag und Bekanntmachung des Hinweises auf die Patenterteilung: **28.02.2018**
(21) Anmeldenummer: 09807485.9
(22) Anmeldetag: 17.11.2009
(51) Int. Cl.: G01D 5/20

(54) **SENSORANORDNUNG UND VERFAHREN ZUR BESTIMMUNG DER POSITION UND/ODER POSITIONSÄNDERUNG EINES MESSOBJEKTS**
SENSOR ARRANGEMENT AND METHOD FOR DETERMINING THE POSITION AND/OR CHANGE IN POSITION OF A MEASUREMENT OBJECT
ENSEMBLE CAPTEUR ET PROCÉDÉ POUR DÉTERMINER LA POSITION ET/OU LE CHANGEMENT DE POSITION D'UN OBJET DE MESURE

(30) Priorität: 18.12.2008 DE 102008063528
(43) Veröffentlichungstag der Anmeldung: 24.08.2011
(73) Patentinhaber: Micro-Epsilon Messtechnik GmbH & Co. KG, 94496 Ortenburg (DE)
(72) Erfinder: MEDNIKOV, Vladislav, 443096 Samara (RU)
(74) Vertreter: Patent- und Rechtsanwälte Ullrich & Naumann
(86) Internationale Anmeldenummer: PCT/DE2009/001609
(87) Internationale Veröffentlichungsnummer: WO 2010/069285

(56) Entgegenhaltungen:
- EP-B1- 1 721 130
- DE-A1- 2 546 487
- DE-B3-102007 002 085

## Beschreibung

Die Erfindung betrifft eine Sensoranordnung zur Bestimmung der Position und/oder Positionsänderung eines Messobjekts relativ zu einem Sensor, wobei dem Messobjekt ein Magnet zugeordnet ist. Die Erfindung betrifft ferner ein entsprechendes Verfahren.

Sensoranordnungen und Verfahren zur Bestimmung der Position und/oder der Positionsänderung finden in der Praxis weitreichend Verwendung. Es wird die Position von Kolben, Ventilen, Schlitten oder anderen beweglichen Elementen bestimmt. Anwendungsbereiche reichen von Haushaltsgeräten über Kraftfahrzeuge bis hin zur Feinwerktechnik oder industriellen Fertigungsstraßen. Von großer Bedeutung ist häufig, dass die Position oder Positionsänderung eines Messobjekts mit hoher Empfindlichkeit detektiert werden kann.

Häufig kommen kapazitive oder induktive Sensoren zum Einsatz, die jeweils die Rückwirkung eines Messobjekts auf den Sensor bestimmen. Klassische magnetische Sensoren nutzen die ferromagnetischen Eigenschaften eines Messobjekts oder Wirbelströme, die in einem Messobjekt induziert werden. Daneben ist eine weitere Klasse von Sensoren bekannt, bei denen ein weichmagnetischer Kern durch einen dem Messobjekt zugeordneten Magneten beeinflusst wird. So wird beispielsweise in der DE 36 10 479 A1 ein Sensor offenbart, bei dem ein Magnet einen weichmagnetischen Kern lokal in Sättigung bringt und dadurch einen virtuellen Luftspalt erzeugt. Die Position des Luftspalts kann ausgelesen werden.

Eine andere Möglichkeit zum Messen der Position, die ebenfalls die Einwirkung eines Magneten auf weichmagnetische Materialien nutzt, ist in der EP 1 721 130 B1 offenbart. Dort wird mittels einer Leiterschleife ein Wechselfeld erzeugt, das in einer als Sekundärspule wirkenden sinusförmigen Leiterstruktur eine Spannung induziert. Durch Überlagerung mehrerer sinusförmiger Strukturen kann Bewegungsrichtung und Position des Messobjekts bestimmt werden. Als nachteilig erweist sich jedoch, dass die Leiterstruktur relativ kompliziert aufgebaut ist, präzise gefertigt werden muss, der Sensor recht breit ausgebildet ist und stets ein Träger mit zweiseitig aufgebrachten Leitern notwendig ist. Dadurch ergeben sich relativ hohe Kosten bei der Fertigung und ein unflexibler Einsatz.

Ein weiterer Positionssensor, der nach einem vergleichbaren Prinzip arbeitet, ist aus der DE 39 14 787 A1 bekannt. Der Sensor weist eine Primär- und mindestens eine Sekundärspule auf, die um einen gemeinsamen weichmagnetischen Kern gewickelt sind. Einem Messobjekt ist ein Magnet zugeordnet, der den Kern in Abhängigkeit der Position des Messobjekts lokal in Sättigung bringt. Der dadurch entstehende virtuelle Luftspalt wirkt sich auf die Impedanz der Spulen und deren Transformationsverhältnis aus, was messtechnisch detektierbar ist. Zur Linearisierung der Kennlinie wird die Form des Kerns in Längsrichtung variiert. Hierzu muss der Kern mechanisch bearbeitet und die Spulen müssen auf einen schräg verlaufenden Kern gewickelt werden, was die Herstellung des Sensors kostenintensiv werden lässt. Zudem ist der Sensor relativ groß, was den Einsatz in vielen Bereichen erschwert oder vollständig unterbindet.

Der vorliegenden Erfindung liegt daher die Aufgabe zugrunde, eine Sensoranordnung der eingangs genannten Art derart auszugestalten und weiterzubilden, dass ein betriebssicherer Sensor entsteht, der mit geringen Fertigungskosten herstellbar ist und flexibel einsetzbar ist.

Erfindungsgemäß wird die voranstehende Aufgabe durch die Merkmale des Patentanspruchs 1 gelöst.

In verfahrensmäßiger Hinsicht ist die zuvor aufgezeigte Aufgabe durch die Merkmale des Patentanspruchs 14 gelöst. Es ist zunächst erkannt worden, dass auf eine komplizierte Ausgestaltung der Leiter des Sensors verzichtet werden kann. Dazu wird ein Leiter verwendet, längsseits dessen ein zweiter Leiter in einem Abstand angeordnet ist. Ähnliche Leiterkonfigurationen sind beispielsweise in der DE102007002085 B3 und der DE2546487 offenbart. Dieser Abstand gewährleistet, dass ein ohmscher Kontakt zwischen dem ersten und dem zweiten Leiter unterbleibt. Die Leiter sind dabei vergleichsweise einfach ausgestaltet. Allerdings kann trotz des sehr einfachen Aufbaus ein verblüffend gut arbeitender Sensor aufgebaut werden. Im Einflussbereich des ersten und des zweiten Leiters ist eine weichmagnetische Folie angeordnet, deren Permeabilität sich unter Einfluss eines Magnetfelds ändert. Durch die Anordnung der weichmagnetischen Folie im Einflussbereich der Leiter beeinflusst die Folie die elektromagnetische Kopplung zwischen dem ersten und dem zweiten Leiter. Da die Permeabilität sich unter dem Einfluss eines Magnetfelds ändert, kann durch das Vorhandensein des Felds eines Magneten die elektromagnetische Kopplung zwischen dem ersten und dem zweiten Leiter verändert werden. Ist dem Messobjekt ein Magnet zugeordnet, kann dieser Effekt sensorisch genutzt und ausgewertet werden. Dadurch entsteht ein Sensor, der sehr schmal aufgebaut ist, wodurch sich ein Einsatz auch in räumlich begrenzten Bereichen erschließt. Durch den sehr einfachen Grundaufbau entsteht ein einfach und kostengünstig herzustellender Sensor, der zur Bestimmung der absoluten Position geeignet ist. Erfindungsgemäß weist der erste oder der zweite Leiter zur Auswertung mindestens einen Abgriff auf, durch den der jeweilige Leiter in mindestens zwei Teilabschnitte unterteilt wird. Dadurch kann das bereits gute Verhältnis der Baulänge des Sensors zu dessen Messbereich noch weiter verbessert werden. Durch Auswertung der elektromagnetischen Kopplung in einem entsprechend definierten Teilabschnitt lässt sich die Position und/oder Positionsänderung eines Messobjekts bestimmen. Der dem Messobjekt zugeordnete Magnet führt in Abhängigkeit seiner Position kontinuierlich zu einer Beeinflussung der elektromagnetischen Kopplung. Bei starkem Einfluss des Magneten kommt die weichmagnetische Folie in Sättigung und wird für elektromagnetische Felder transparent. Dadurch ist die elektromagnetische Kopplung im Bereich oder in der Nähe einer Sättigung stark reduziert oder nicht existent. Je weiter die Feldstärke des Magneten abnimmt, desto stärker kann das Magnetfeld von dem einen Leiter zu dem anderen Leiter überkoppeln. Da dieser Vorgang kontinuierlich vonstatten geht, können aus Werten, die die elektromagnetische Kopplung in den einzelnen Teilabschnitten repräsentieren, Rückschlüsse auf die Position und/oder Positionsänderung eines Messobjekts vorgenommen werden.

Es sei darauf hingewiesen, dass eine Sättigung der weichmagnetischen Folie nicht zwangsläufig vorliegen muss. Vielmehr ist es ausreichend, dass es infolge des Magneten zu einer Beeinflussung der Permeabilität kommt. Diese Beeinflussung kann bei starken Magneten bis zur Sättigung führen. Schwächere oder weiter entfernt angeordnete Magnete, die eine Sättigung nicht herbeiführen, sind für den Sensor dennoch einsetzbar. In diesem Fall wird die weichmagnetische Folie nicht vollständig transparent gegenüber elektromagnetischen Feldern. Dennoch wird eine ausreichende positionsabhängige Beeinflussung der elektromagnetischen Kopplung verursacht.

Es sei ferner darauf hingewiesen, dass statt einer weichmagnetischen Folie auch eine weichmagnetische dünne Schicht Verwendung finden könnte. Diese dünne Schicht kann auf die Struktur aufgedampft oder auf andere aus der Praxis bekannte Arten aufgetragen werden. Die Wahl einer weichmagnetischen Schicht oder einer weichmagnetischen dünnen Schicht wird von dem jeweiligen Einsatzbereich und dem Herstellungsprozess des Sensors abhängen. Als weichmagnetisches Material, das zur Bildung der weichmagnetischen Folie oder der weichmagnetischen dünnen Schicht eingesetzt werden kann, lassen sich amorphe oder nanokristalline Werkstoffe einsetzen.

Vorteilhafterweise sind der erste und der zweite Leiter auf einem Substrat aufgebracht. Das Substrat kann durch die verschiedensten Materialien gebildet sein. Als Substrat sind eine Platine ebenso geeignet wie eine Keramik, Kunststoffteile oder eine Kunststofffolie. Prinzipiell können sogar Metalle als Substrate dienen. Hier muss lediglich eine ausreichende elektrische Isolation gegenüber den Leiterstrukturen erreicht werden, was jedoch im Allgemeinen einfach zu realisieren ist. Voraussetzung an das Substrat ist lediglich, dass das Substrat ausreichend Eigenschaften bietet, die Leiterstruktur zu tragen. Das Substrat könnte starr oder flexibel, massiv oder folienartig ausgebildet sein. Dünne flexible Substrate erlauben beispielsweise, dass der Sensor relativ beliebig auf einem Untergrund aufgeklebt werden kann und dass sich der Sensor optimal einer beliebigen Kontur anpasst. Dadurch könnte der Sensor in gebogener Form verwendet werden. Welches Substrat gewählt wird und welche mechanischen Eigenschaften das Substrat aufweisen soll, wird durch die jeweilige Anwendung des Sensors bedingt.

Je nach Anwendung könnte sogar auf das Substrat verzichtet werden, indem die weichmagnetische Folie selbst als Träger der Leiter herangezogen wird. Sofern der Sensor beispielsweise keinen größeren mechanischen Belastungen ausgesetzt oder unter normalen Betriebsbedingungen auf einem Untergrund aufgeklebt ist, lässt sich hierdurch eine besonders kostengünstige und einfach herzustellende Ausgestaltung erreichen. Die Folie müsste geeignet gegenüber den Leitern isoliert sein, um die Funktion des Sensors zu gewährleisten. Dies könnte beispielsweise durch Aufbringen einer Lackschicht auf die weichmagnetische Folie geschehen, bevor die Leiter auf die Folie aufgebracht werden.

Vorzugsweise sind der erste und der zweite Leiter in einem Abstand zueinander angeordnet. Dieser Abstand könnte zum einen konstant längs der Leiter sein, zum anderen könnte der Abstand variieren. Durch Variation des Abstands lässt sich vergleichsweise einfach die Kennlinie des Sensors anpassen. Generell gilt, dass der Sensor in Bereichen mit geringerem Abstand über eine höhere Empfindlichkeit verfügt als in Bereichen mit größerem Abstand. Dadurch kann eine Liniearisierung der Kennlinie erreicht werden. Andererseits könnte der Sensor auch derart ausgebildet sein, dass er in einem definierten Bereich über eine höhere Empfindlichkeit verfügt als in einem anderen Bereich. Dadurch könnten beispielsweise Bereiche um eine Nulllage herum besonders empfindlich gegenüber Positionsänderungen ausgebildet sein, während die äußeren Bereiche über eine geringere Empfindlichkeit verfügen.

Zusätzlich oder alternativ zu einer Variation des Abstands könnten der erste oder der zweite Leiter mittels eines Lasers getrimmt worden sein. Dadurch kann gezielt die Charakteristik der Leiter des Sensors beeinflusst werden, wodurch eine Kalibrierung jedes Sensors zum Ausgleichen von Fertigungstoleranzen möglich ist.

Gemäß einer Ausgestaltung der Erfindung könnten der erste und/oder der zweite Leiter gerade, d. h. als Geradenstück, ausgeführt sein. Dabei könnten die beiden Geradenstücke im Wesentlichen parallel zueinander angeordnet sein. Allerdings ist es auch möglich, dass einer der beiden Leiter oder beide Leiter an einer oder mehreren Stellen einen Knick aufweisen, wodurch eine Variation des Abstands zwischen den beiden Leitern realisiert sein kann. Die Leiter an sich wären in diesem Fall als eine Aneinanderreihung von Geradenstücken ausgebildet.

Alternativ könnten die Leiter als Kurve ausgebildet sein. Dabei wird die Kurve im Allgemeinen einfach ausgebildet sein. Hier wäre beispielsweise ein Kreisausschnitt denkbar. Die beiden Leiter könnten als ineinander angeordnete, beispielsweise konzentrische Kreise bzw. Kreisbögen, vorliegen. Dadurch wären auch nicht lineare Bewegungen mittels der Sensoranordnung detektierbar. Auf diese Weise werden rotatorische Bewegungen des Messobjekts oder Bewegungen auf einer Kreisbahn detektierbar. Der Sensor wäre somit zur Winkelmessung einsetzbar.

Darüber hinaus könnten die beiden zuvor beschriebenen Ausbildungen kombiniert werden. So könnte der erste Leiter gerade ausgebildet sein, während der zweite Leiter Teil einer Kurve ist oder umgekehrt. Voraussetzung hierbei - wie bei den zuvor beschriebenen Ausführungen auch - ist, dass die beiden Leiter in vergleichsweise geringem Abstand zueinander verlaufen. Hierbei sind Abstände bis in den niedrigen zweistelligen Millimeterbereich hinein sinnvoll anwendbar.

Bei Verwendung von kurvenförmigen Leitern könnte das Substrat entsprechend der Leiter ausgebildet sein. So könnte beispielsweise bei Leitern, die Ausschnitte zweier konzentrischer Kreise darstellen, das Substrat entsprechend der Form der Leiter ebenfalls kreisförmig, d.h. als Segment eines Rings ausgebildet sein. Damit ließe sich ein Substrat mit minimalem Materialaufwand realisieren. Zudem kann besonderen Einbausituationen, beispielsweise einer Anordnung des Sensors um eine Welle oder einer Achse herum, Rechnung getragen werden.

Zum Erreichen einer besonders großen Beeinflussung des Magneten könnte beidseits der Leiter jeweils eine weichmagnetische Folie angeordnet sein. Die weichmagnetischen Folien würden damit die beiden Leiter zu zwei Seiten hin abschirmen und einen Weg mit definiertem magnetischem Widerstand zur Verfügung stellen. Damit könnten die elektromagnetischen Felder, die durch einen der beiden Leiter erzeugt werden, über den durch die magnetischen Folien gebildeten magnetischen Kreis in den anderen Leiter eingekoppelt werden. Befindet sich ein Messobjekt mit einem Magneten in der Nähe des Sensors, so werden beide weichmagnetische Folien beeinflusst, wodurch sich der magnetische Widerstand in stärkerem Maße verändert als mit lediglich einer Folie. Dies führt zu einem wesentlich stärkeren Messeffekt, was die Detektion der Position und/oder Positionsänderung des Messobjekts begünstigt.

Vorzugsweise ist der erste Leiter mit einer Wechselstromquelle verbunden. Diese Wechselstromquelle erzeugt einen Wechselstrom in dem ersten Leiter, der ein Wechselfeld zur Folge hat. Dieses Wechselfeld wird von dem ersten Leiter ausgesandt und gelangt über die weichmagnetische Folie/n zu dem zweiten Leiter, der zur Detektion mit einer Auswerteschaltung verbunden sein kann. Dabei hat sich als günstig erwiesen, die Speisefrequenz zwischen 1 MHz und 20 MHz einzustellen. Durch die relativ hohe Speisefrequenz ergibt sich eine sehr hohe Bandbreite des Sensors, die mit bekannten Sensoren mit Spulen nicht zu erreichen ist.

Der dem Messobjekt zugeordnete Magnet könnte auf verschiedene Arten gebildet sein. So könnte der Magnet durch einen Permanentmagneten oder durch eine mit Gleichstrom durchflossene Spule gebildet sein. In beiden Fällen könnte der Magnet derart angeordnet sein, dass die Nord-Süd-Richtung des Magneten im Wesentlichen parallel zu den Leitern, im Falle einer kurvenförmigen Ausprägung der Leiter oder bei einem gebogenen oder gewölbten Sensor in Wesentlichen tangential zu den Leitern angeordnet sind. Durch diese Art der Anordnung kann im Vergleich zu einer Anordnung des Magneten quer zu den Leitern ein größerer Messbereich realisiert werden. Allerdings kann der Magnet dennoch quer zu den Leitern angeordnet sein. Die Bewegung des Magneten und somit des Messobjekts könnte in beiden Fällen in Längsrichtung der Leiter erfolgen.

Der Magnet könnte zudem an verschiedenen Stellen relativ zu den Leitern angeordnet sein. Voraussetzung ist, dass der Magnet in ausreichender Nähe zu dem Sensor angeordnet ist, um die weichmagnetische/n Folie/n ausreichend beeinflussen zu können. Der Magnet könnte im Bereich der Ebene angeordnet sein, die durch die beiden Leiter aufgespannt wird. Alternativ könnte sich der Magnet über den beiden Leitern im Bereich der Mittelebene der beiden Leiter befinden. Darüber hinaus sind auch Zwischenpositionen denkbar.

Bei Verwendung eines einzelnen Abgriffes könnte dieser in der Mitte des jeweiligen Leiters angeordnet sein. Der Abgriff hätte somit die Funktion eines Mittelabgriffs, der den Leiter in zwei im Wesentlichen gleich große Teilabschnitte unterteilt. Damit wird eine Nutzung als differenzieller Sensor ermöglicht, in dessen gleich großen Teilabschnitten sich eine nahezu gleiche elektromagnetische Kopplung einstellt, wenn sich der Magnet in der Mittelposition befindet. Der Sensor weist dann eine S-förmige Kennlinie auf und bietet ferner Vorteile bezüglich des Messbereichs und der Kompensation von Störeinflüssen wie Temperatur oder elektromagnetischer Störungen.

Bei zwei oder mehreren Abgriffen könnten die Abgriffe äquidistant angeordnet sein. Dadurch wird der Leiter in mehrere gleich große Teilabschnitte unterteilt. Dies hat wiederum zur Folge, dass zwischen jedem Teilabschnitt des einen Leiters und dem anderen Leiter ohne Beeinflussung durch den Magneten des Messobjekts eine vergleichbare elektromagnetische Kopplung vorliegt. Damit reduziert sich wiederum der Aufwand, der für Linearisierungs- und Anpassungsmaßnahmen notwendig gewesen wäre. Zum Erreichen einer besonders gearteten Kennlinie könnten die Abgriffe jedoch auch nicht äquidistant angeordnet sein. In kürzeren Teilabschnitten wird zwar eine niedrigere Spannung induziert als in längeren Teilabschnitten, allerdings kann durch kürzere Teilabschnitte in diesem Bereich die räumliche Auslösung erhöht werden. Generell gilt, dass durch eine größere Anzahl von Abgriffen - unabhängig von deren Abständen zueinander - das Verhältnis der Baulänge des Sensors zu dessen Messbereich gesteigert werden kann.

Zur Auswertung des Sensors stehen verschiedene Möglichkeiten zur Verfügung. So könnten die Abgriffe an dem zweiten Leiter, der zur Detektion der durch den ersten Leiter ausgesendeten elektromagnetischen Wellen verwendet wird, mit jeweils einem Widerstand verbunden sein. Die dem Sensor abgewandten Anschlüsse der Widerstände könnten mit einer Summiervorrichtung verbunden sein, die die Summe der an den einzelnen Eingängen anliegenden Spannungen bildet. Durch geeignete Ausbildung der Widerstände lässt sich auf diese Art und Weise ein analoges Ausgangssignal gewinnen, das die Position des Messobjekts in eindeutiger Weise repräsentiert. Bei einer alternativen Ausgestaltung werden die Abgriffe direkt mit einer Summiervorrichtung verbunden. Eine entsprechende Auswertung ist in der EP 0 916 075 B1 beschrieben, auf die hiermit Bezug genommen wird. Eine andere Alternative nutzt jeweils einen Verstärker an jedem Abgriff. Die mit geeignetem Verstärkungsfaktor verstärkten Signale werden dann einer Summiervorrichtung zugeführt.

Alternativ könnten die Teilabschnitte des zweiten Leiters extern derart miteinander verschaltet sein, dass sich die in den einzelnen Teilabschnitten induzierten Spannungen im Wesentlichen gegenseitig kompensieren, wenn sich der Magnet und somit das Messobjekt in einer Nulllage befindet. Wird das Messobjekt aus dieser Nulllage herausbewegt, so wird das Gleichgewicht gestört und eine die Position des Messobjekts repräsentierende Spannung ausgegeben. Dieses Auswertungsprinzip ist beispielsweise aus dem Bereich der LVDT (Linear Variabler Differenzial-Transformator) bekannt. Durch Kombination zweier Leiter mit einer weichmagnetischen Folie ist der Messeffekt jedoch deutlich größer als bei dem klassischen LVDT oder vergleichbaren Sensoranordnungen.

Beim Betreiben der Sensoranordnung sind verschiedene Möglichkeiten denkbar. So könnte der erste Leiter, der von einem Wechselstrom durchflossen wird, mit einem oder mehreren Abgriffen versehen sein. In diesem Fall könnten die einzelnen durch die Abgriffe bzw. die Anschlüsse des ersten Leiters gebildeten Teilabschnitte nacheinander mit Wechselstrom beaufschlagt werden. Eine räumliche Auflösung entsteht, indem lediglich in einem definierten Teilbereich die elektromagnetische Kopplung zwischen dem ersten Leiter und dem zweiten Leiter ausgewertet wird. Dieser Teilbereich ist durch die den Stromkreis bildenden Abgriffe bzw. ein Ende des Leiters und einen Abgriff definiert. Dabei könnten zum einen unmittelbar benachbarte Abgriffe zum Bestromen herangezogen werden, allerdings wäre auch denkbar, einen Wechselstrom an einem Abgriff/Anschluss einzukoppeln und einem nicht unmittelbar benachbarten Abgriff/Anschluss wieder auszukoppeln.

Daneben könnte ein oder mehrere Abgriffe an dem zweiten Leiter zur räumlichen Auflösung der Auswertung herangezogen werden, wobei der zweite Leiter zur Auswertung der elektromagnetischen Kopplung genutzt würde. Dabei könnten die durch die Abgriffe bzw. ein Ende des Leiters und einen Abgriff gebildeten Teilabschnitte nacheinander ausgewertet werden. Dazu ließen sich die einzelnen Teilabschnitte nacheinander einer Auswerteschaltung aufschalten. Alternativ könnten mehrere Auswerteschaltungen oder mehrere Eingänge einer Auswerteschaltung vorgesehen sein, mit denen die Teilabschnitte im Wesentlichen parallel ausgewertet werden. Die erste aufgezeigte Möglichkeit bietet den Vorteil, dass lediglich eine Auswerteschaltung notwendig ist und somit die Elektronik günstiger herzustellen ist. Eine parallele Auswertung mehrerer Teilabschnitte erlaubt eine höhere Dynamik der detektierbaren Bewegung des Messobjekts, da hier die Messungen durch Bewegung des Messobjekts während eines Messzykluses nicht oder nur unwesentlich beeinflussen werden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 bzw. 14 nachgeordneten Patentansprüche und andererseits auf die nachfolgende Erläuterung bevorzugter Ausführungsbeispiele der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: einen Schnitt durch einen erfindungsgemäßen Sensor,
- Fig. 2: eine Seitenansicht des Sensors nach Fig. 1 mit einem Magneten sowie ein Diagramm der sich einstellenden Permeabilität der weichmagnetischen Folie,
- Fig. 3: ein Diagramm mit einer Kurvenschar, die die relative Kopplung M_{d}(x)/M₀(d) zwischen dem ersten und dem zweiten Leiter entlang des Messbereichs x in Abhängigkeit des Abstandes d zwischen den Leitern wiedergibt,
- Fig. 4: eine Aufsicht des Sensors nach Fig. 1 in einer ersten Ausführungsform mit einem Abgriff in der Mitte des zweiten Leiters,
- Fig. 5: eine Aufsicht des Sensors nach Fig. 1 in einer zweiten Ausführung mit vier Abgriffen an dem zweiten Leiter sowie eine beispielhaften Auswerteschaltung,
- Fig. 6: eine Aufsicht der Leiterstruktur eines Sensors mit einem Abgriff in der Mitte des ersten Leiters mit konstantem und variierendem Abstand,
- Fig. 7: eine Ausgangskennlinie eines Sensors mit den Leiterstrukturen gemäß Fig. 6,
- Fig. 8: eine Ausgestaltung eines erfindungsgemäßen Sensors zur Messung von Kreisbewegungen und
- Fig. 9: eine beispielhafte Auswerteschaltung zur Auswertung einer erfindungsgemäßen Sensoranordnung.

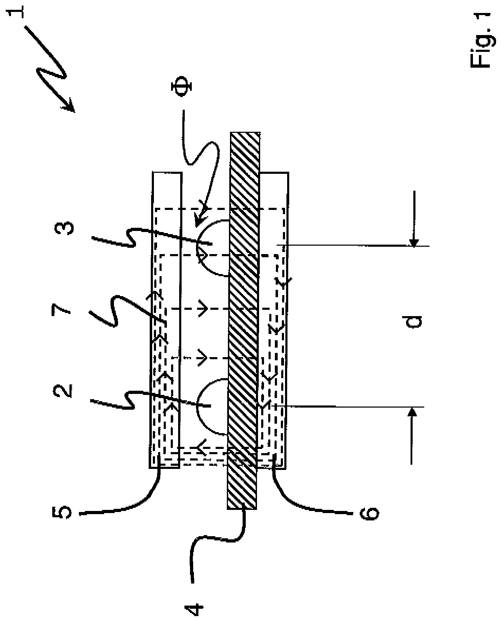

Fig. 1 zeigt einen erfindungsgemäßen Sensor 1, bei dem ein erster Leiter 2 und ein zweiter Leiter 3 in einem Abstand d auf einem Substrat 4 angeordnet sind. Das Substrat 4 ist durch eine Platine gebildet und die Leiter sind als Leiterbahnen der Platine ausgeführt. Beidseits der Leiter 2 und 3, d.h. oberhalb und unterhalb der Leiter, ist jeweils eine weichmagnetische Folie 5 und 6 aufgebracht, die das durch den ersten Leiter erzeugte elektromagnetische Feld zu dem zweiten Leiter 3 lenken. Der sich durch einen Stromfluss im ersten Leiter 2 einstellende magnetische Fluss *Φ* ist beispielhaft gestrichelt eingezeichnet. Zwischen der weichmagnetischen Folie 5 und den Leitern 2 und 3 ist eine Isolationsschicht angeordnet, die eine elektrische Isolation zu den Leitern 2 und 3 gewährleistet. Die Isolationsschicht ist in Fig. 1 der Übersichtlichkeit wegen nicht dargestellt, vielmehr ist die weichmagnetische Folie 5 in Abstand zu den Leitern 2 und 3 dargestellt.

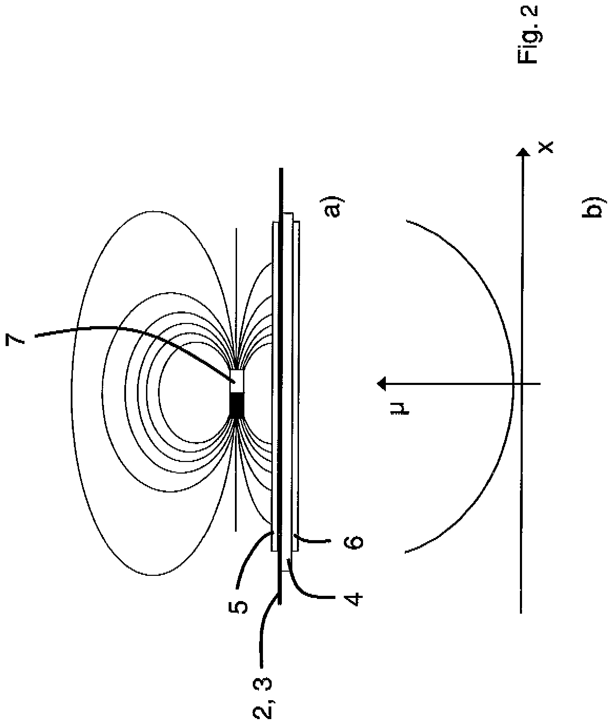

Fig. 2a) stellt eine Seitenansicht des Sensors 1 nach Fig. 1 dar. Auf dem Substrat 4 ist ein sich nach links und rechts ausdehnender Leiter 2 oder 3 dargestellt, der durch die weichmagnetische Folie 5 oberhalb abgedeckt ist und auf dessen dem Substrat gegenüberliegenden Seite ebenso eine weichmagnetische Folie 6 angeordnet ist. Als effektiv wirksamer Leiter ist dabei der Teil des Leiters anzusehen, der von der weichmagnetischen Folie bedeckt ist. In nicht durch die weichmagnetische Folie abgedeckten Teilen ist die elektromagnetische Kopplung derart gering, dass diese die Kopplung zwischen den beiden Leitern nur in geringem Maße beeinflussen und somit vernachlässigbar sind.

In der Nähe des Sensors 1 ist ein Magnet 7 oberhalb der beiden Leiter angeordnet, dessen Nord-Süd-Richtung längs des Sensors bzw. längs der Leiter ausgerichtet ist. In Fig. 2a) sind einige Feldlinien des Magneten dargestellt. Der Magnet 7 beeinflusst die weichmagnetischen Folien 5, 6, wodurch die Folien 5, 6 für elektromagnetische Felder unterschiedlich stark durch die weichmagnetische Folie beeinflusst werden. Die sich einstellende Permeabilität *µ* einer der weichmagnetischen Folien ist unterhalb der Sensoranordnung in Fig. 2b) dargestellt, wobei zu erkennen ist, dass in unmittelbarer Nähe des Magneten die Permeabilität deutlich niedriger ist als in den Randbereichen. Dadurch ist in diesem Bereich die elektromagnetische Kopplung zwischen dem ersten und dem zweiten Leiter nahezu aufgehoben, während die weichmagnetischen Folien am Rand des Sensors noch deutlich zu einer Kopplung zwischen den Leitern beitragen. Aus der Tatsache, dass sich im Minimum ein Wert ungleich Null einstellt, ist zu erkennen, dass die Folien nicht in Sättigung gelangen, dieser allerdings recht nahe kommen. Es sei darauf hingewiesen, dass die in Fig. 2b) dargestellte Kurve lediglich exemplarisch ist und den tatsächlichen Verlauf der Permeabilität nur annähernd wiedergibt.

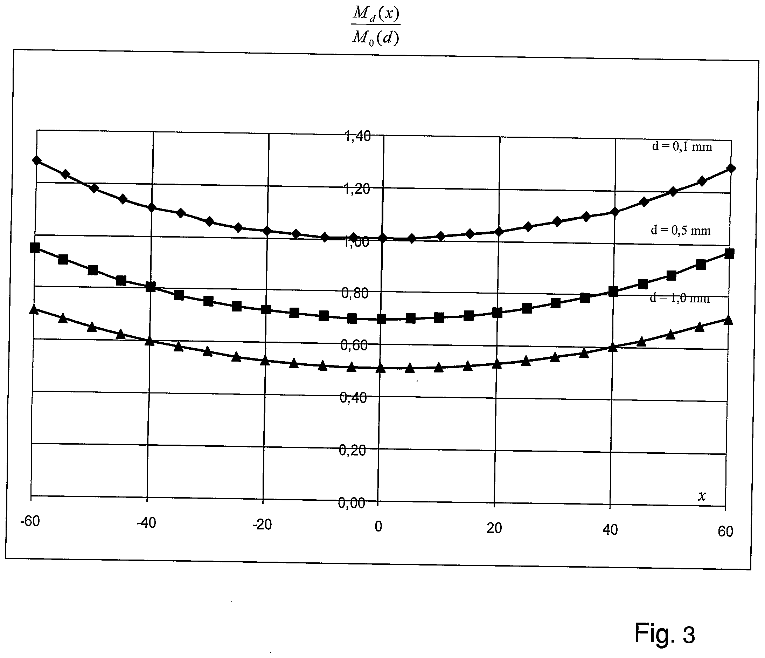

Fig. 3 gibt für einen exemplarischen Sensor die Verteilung der relativen Kopplung *M_{d}(x)*/*M₀(d)* zwischen dem ersten und dem zweiten Leiter entlang des Messbereichs *x* wieder. Dabei ist Parameter der dargestellten Kurvenschar der Abstand *d* der Leiter. Mit dem Abstand *d* ändert sich die relative Kopplung *M_{d}(x)*/*M₀(d)* praktisch exponentiell. Fig. 3 zeigt, dass die Kennlinie des Sensors mit einer Änderung des Abstands beeinflusst werden kann. Damit kann eine Linearisierung oder eine Formung einer gewünschten Kennlinie erzielt werden.

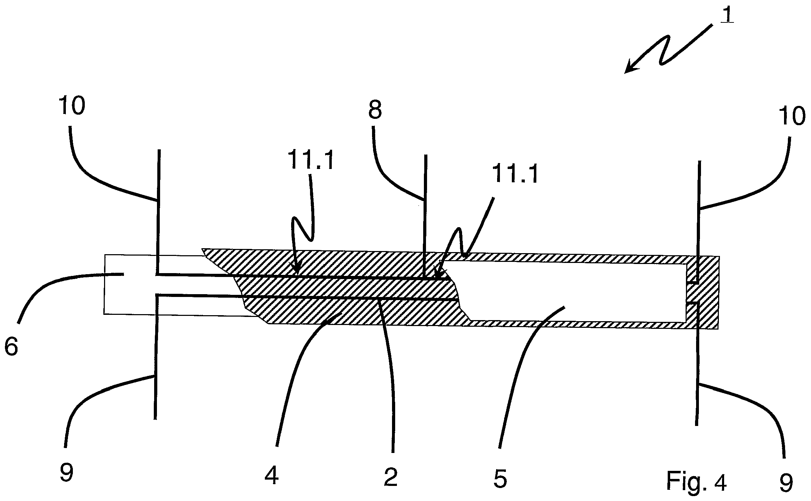

Fig. 4 zeigt eine Aufsicht des Sensors 1 nach Fig. 1, wobei in der Mitte des zweiten Leiters 3 ein Abgriff 8 vorgesehen ist. Der erste Leiter 2 ist über die Anschlüsse 9 mit einer nicht eingezeichneten Wechselstromquelle verbunden, die einen Wechselstrom in dem ersten Leiter 2 erzeugt. Der Wechselstrom erzeugt ein elektromagnetisches Feld, das über die weichmagnetische Folien 5 und 6 in den zweiten Leiter 3 eine Spannung gleicher Frequenz induziert. Der Grad der magnetischen Kopplung zwischen dem ersten Leiter 2 und dem zweiten Leiter 3 hängt von dem Magnetfeld des dem Messobjekt zugeordneten Magneten ab, das die Permeabilität der weichmagnetischen Folien beeinflusst. Der zweite Leiter 3 ist über die beiden Anschlüsse 10 und den Abgriff 8 mit einer Auswerteschaltung verbunden, die die elektromagnetische Kopplung zwischen dem ersten und dem zweiten Leiter auswertet.

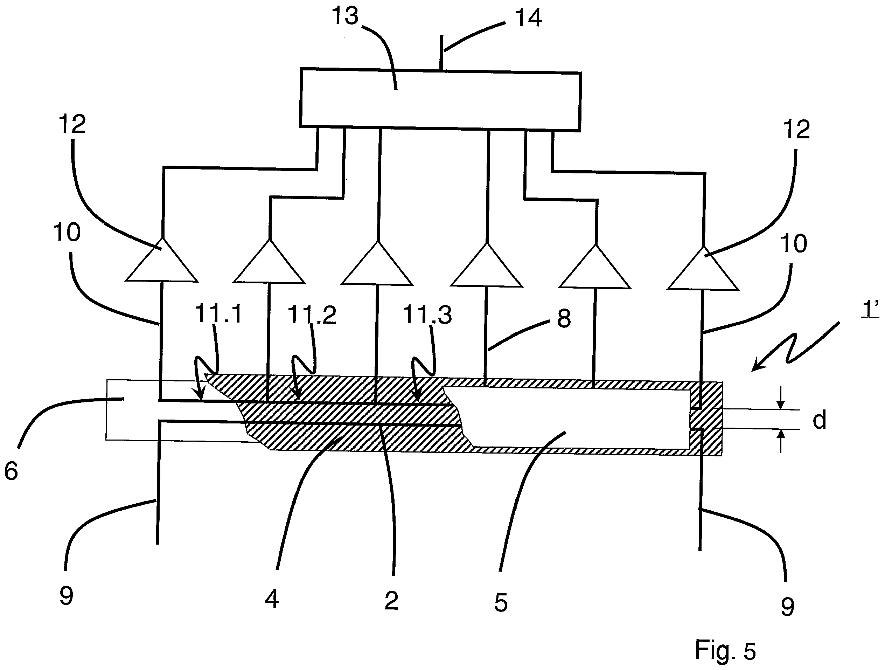

Fig. 5 zeigt eine andere Ausgestaltung eines erfindungsgemäßen Sensors 1'. Auf einem Substrat 4 sind in einem Abstand *d* ein erster Leiter 2 und ein zweiter Leiter 3 angeordnet, wobei beidseits der Leiter 2 und 3 jeweils eine weichmagnetische Folie 5 und 6 angeordnet ist. Die in der Fig. obere Folie ist der Übersichtlichkeit wegen - ähnlich wie bei Fig. 4 nur teilweise angedeutet. Die Folie erstreckt sich jedoch bis zum Ende der Folie 6. Entsprechendes gilt für das Substrat 4.

Der erste Leiter 2 wird über die Anschlüsse 9 mit einer nicht eingezeichneten Wechselstromquelle verbunden, die einen Stromfluss und damit ein elektromagnetisches Feld um den ersten Leiter 2 herum erzeugt. Das elektromagnetische Feld wird über die weichmagnetischen Folien 5 und 6 in Abhängigkeit der durch den Magneten des Messobjekts hervorgerufenen Änderung der Permeabilität in den zweiten Leiter eingekoppelt, wodurch dort eine Spannung induziert wird. Über die Anschlüsse 10 des zweiten Leiters und vier äquidistant über den zweiten Leiter 3 verteilte Abgriffe 8 kann die elektromagnetische Kopplung zwischen dem ersten Leiter 2 und dem zweiten Leiter 3 in den durch die Abgriffe 8 definierten Teilbereichen 11.1 bis 11.5 ausgewertet werden.

In Fig. 5 ist im oberen Bereich zusätzlich eine beispielhafte Auswerteschaltung eingezeichnet. Die Abgriffe 8 sowie die Anschlüsse 10 des zweiten Leiters 3 sind jeweils mit einem Operationsverstärker 12 verbunden, der die anliegende Spannung mit einem Verstärkungsfaktor K₁, ..., K₅ bzw. K₆ verstärkt. Dabei können die Verstärkungsfaktoren derart gewählt werden, dass sich eine lineare Kennlinie der gesamten Anordnung ergibt. Die Ausgänge der Verstärker werden auf die Eingänge einer Summiervorrichtung 13 geschaltet, die die Summe der Eingangssignale als Ausgangssignal 14 aus der Auswerteschaltung ausgibt. Bei dieser Ausgestaltung der Auswerteschaltung werden die einzelnen Teilbereiche 11 parallel ausgewertet. Alternativ könnten statt der Operationsverstärker auch Widerstände verwendet und eine Auswertung entsprechend der EP 0 916 075 B1 durchgeführt werden.

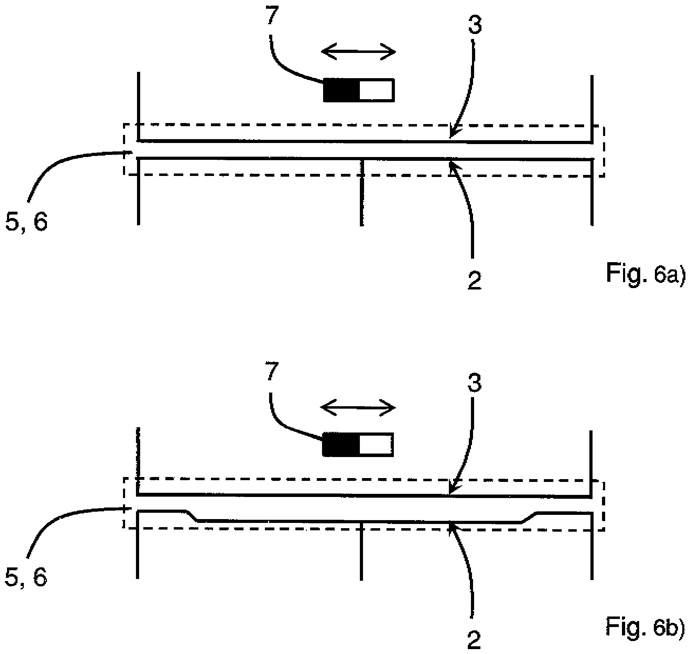

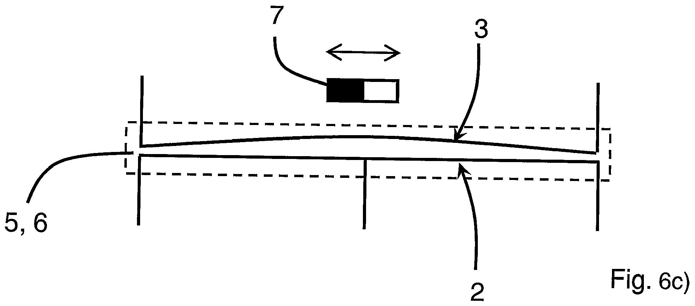

Fig. 6 zeigt eine Reihe von Leiteranordnungen, die sich jeweils in dem Verlauf des Abstandes *d* zwischen dem ersten und zweiten Leiter unterscheiden. In allen Teilfiguren ist ein Abgriff 8 an dem zweiten Leiter 3 als Mittelabgriff ausgebildet. Die weichmagnetische Folie ist jeweils gestrichelt angedeutet. In der Nähe des Sensors ist ein Magnet 7 in Form eines Dauermagneten angeordnet, der in Längsrichtung zu den Leitern 2 und 3 verschiebbar ist. Der Magnet 7 befindet sich im Bereich einer Ebene, die durch die beiden Leiter 2 und 3 aufgespannt wird.

Fig. 6a) zeigt eine Leiteranordnung, bei der der erste Leiter 2 und der zweite Leiter 3 parallel und in konstantem Abstand *d* zueinander angeordnet sind. Bei der Leiteranordnung nach Fig. 6b) weist der zweite Leiter 3 Knickstellen auf, wodurch ein zweiter Leiter 3 entsteht, bei dem einzelne Teile parallel zu dem als Gerade ausgebildeten ersten Leiter 2 angeordnet sind. Alle Teile des ersten und des zweiten Leiters sind in einer Ebene angeordnet. In Fig. 6c) ist eine Abstandsvariation dadurch gebildet, dass der erste Leiter 2 eine Kurve in Form eines Kreisbogens beschreibt. Der zweite Leiter 3 ist gerade ausgebildet.

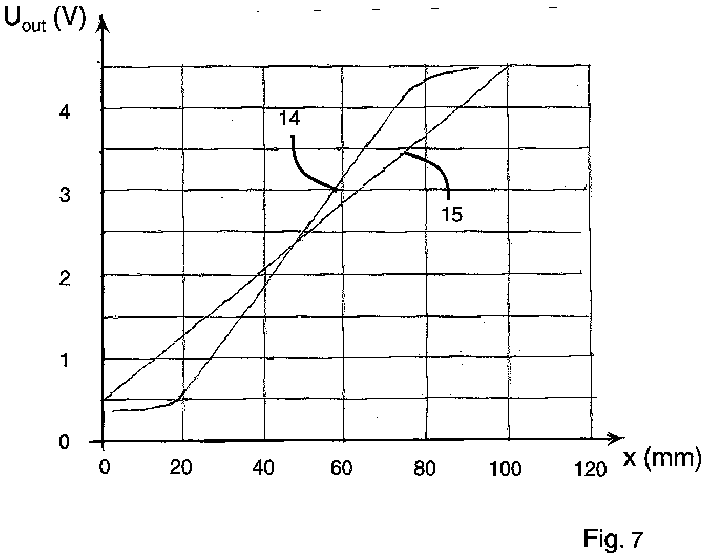

Fig. 7 zeigt die zugehörigen Kennlinien der Sensoren nach Fig. 6. Mit Kennlinie 15 ist der Zusammenhang zwischen der Position des Magneten und der Ausgangsspannung bei dem Sensor nach Fig. 6a) wiedergegeben. Die Gerade 16 repräsentiert die Kennlinie des Sensors nach Fig. 6c). Die Kennlinie der Sensors nach Fig. 6b) ergibt keine vollständig lineare Kennlinie, kommt dieser aber recht nahe. Es ist zu erkennen, dass eine Linearisierung der Kennlinie durch Variation der Abstands erreichbar ist.

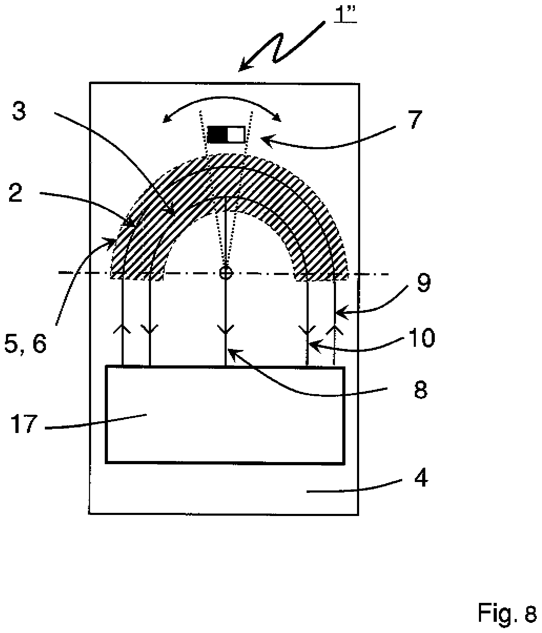

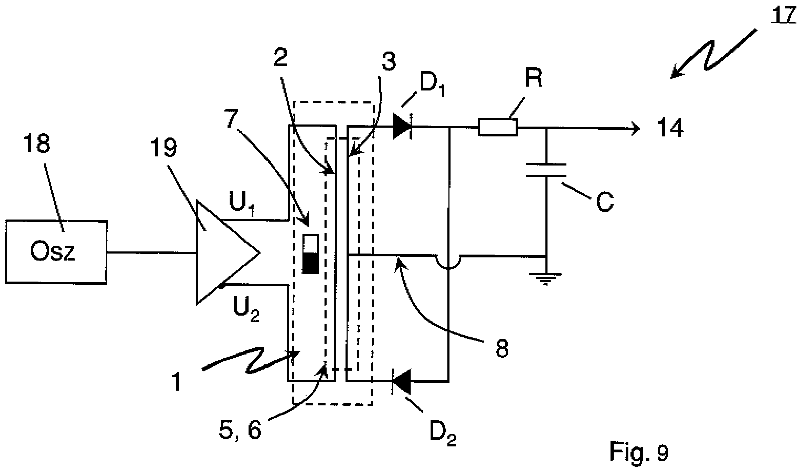

Fig. 8 zeigt eine andere Ausführungsform eines erfindungsgemäßen Sensors 1". Ein kreisförmig ausgebildeter erster Leiter 2 und ein konzentrisch dazu ausgebildeter zweiter Leiter 3 sind auf einem Substrat 4 aufgebracht. Beidseits der Leiter sind wiederum jeweils eine weichmagnetische Folie 5 und 6 angeordnet. Die Anschlüsse des Leiters 2 und 3 sind mit einer Auswerteschaltung 17 verbunden, die die Position eines Messobjekts bestimmt. Das Messobjekt ist in Fig. 9 durch einen Magneten 7 dargestellt, der entlang einer Kreisbahn bewegbar ist. Ein Mittelabgriff 8 ist mit dem zweiten Leiter verbunden. Der in Fig. 9 dargestellte Sensor ist zur Messung von Winkelbewegungen geeignet. Das Messprinzip entspricht dem zuvor im Zusammenhang mit den linearen Sensoren beschriebenen.

Fig. 9 zeigt eine andere Ausführung einer Auswerteschaltung 17, mit der die Signale eines erfindungsgemäßen Sensors 1 ausgewertet werden können. Ein Sensor 1 gemäß Fig. 4, der aus einem ersten Leiter 2 und einem zweiten Leiter 3 gebildet ist und einen Abgriff 8 in der Mitte des zweiten Leiters 3 aufweist, wird eingangsseitig, d.h. an den Anschlüssen des ersten Leiters 2 mit Wechselstrom beaufschlagt. Dazu versorgt ein Oszillator 18 über einen Sensortreiber 19 den ersten Leiter 2 mit zwei komplementären Spannungen U₁ und U₂. Ein Magnet 7, der einem nicht eingezeichneten Messobjekt zugeordnet ist, beeinflusst die Permeabilität zweier weichmagnetischer Folien 5 und 6, die Einfluss auf die elektromagnetische Kopplung zwischen dem ersten Leiter 2 und dem zweiten Leiter 3 in Abhängigkeit der Position des Magneten 7 nehmen.

Die in dem zweiten Leiter 3 induzierte Spannung wird über zwei Dioden D₁ und D₂ zu einem Stromkreis ergänzt. An dem Verbindungspunkt zwischen den Dioden D₁ und D₂ ist ein Widerstand R angeschlossen, dessen zweiter Anschluss mit einem als Tiefpass wirkenden Kondensator C verbunden ist und als Ausgangssignal 14 der Auswerteschaltung 17 ausgegeben wird. Der zweite Anschluss des Kondensators C ist mit Masse und dem Abgriff 8 des zweiten Leiters 3 verbunden.

Die durch den Sensortreiber 19 erzeugte sinusförmige Wechselspannung erzeugt ein elektromagnetisches Feld, das über die weichmagnetischen Folien 5 und 6 in den zweiten Leiter 3 eingekoppelt wird. Dort wird eine Spannung induziert, die bei der in Fig. 6 dargestellten Mittellage zu einer gegenseitigen Kompensation der Spannungen führt. Bewegt sich der Magnet 7 aus dieser Mittellage heraus, wird in den beiden durch den Abgriff 8 definierten Teilabschnitten des zweiten Leiters 3 eine unterschiedliche magnetische Kopplung hervorgerufen, wodurch sich die in den Teilabschnitten induzierten Spannungen verändern. Dadurch entsteht eine von Null verschiedene Ausgangsspannung, die tiefpass-gefiltert als Ausgangssignal 14 aus der Auswerteschaltung 17 ausgegeben wird. Dabei stellt sich eine S-förmige Kennlinie - ähnlich der in Fig. 7 mit Bezugszeichen 14 wiedergegebenen - ein.

Hinsichtlich weiterer vorteilhafter Ausgestaltungen der erfindungsgemäßen Sensoranordnung und des erfindungsgemäßen Verfahrens wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele der erfindungsgemäßen Anordnung lediglich zur Erörterung der beanspruchten Lehre dienen, diese jedoch nicht auf die Ausführungsbeispiele einschränken.

### Bezugszeichenliste

- 1: Sensor
- 2: erster Leiter
- 3: zweiter Leiter
- 4: Substrat
- 5: weichmagnetische Folie
- 6: weichmagnetische Folie
- 7: Magnet
- 8: Abgriff
- 9: Anschlüsse
- 10: Anschlüsse
- 11: Teilabschnitt(e)
- 12: Operationsverstärker
- 13: Summiervorrichtung
- 14: Ausgangssignal
- 15: nicht linearisierte Kennlinie
- 16: linearisierte Kennlinie
- 17: Auswerteschaltung
- 18: Oszillator
- 19: Sensortreiber

## Patentansprüche

1. Sensoranordnung mit einem Sensor (1) zur Bestimmung der Position und/oder Positionsänderung eines Messobjekts relativ zu dem Sensor (1), wobei dem Messobjekt ein Magnet (7) zugeordnet ist,
wobei der Sensor (1) einen ersten Leiter (2) und einen längsseits des ersten Leiters (2) angeordneten zweiten Leiter (3) aufweist, wobei im Einflussbereich des ersten und des zweiten Leiters (2, 3) eine weichmagnetische Folie (5, 6) angeordnet ist, deren Permeabilität sich unter Einfluss eines Magnetfelds ändert und die die elektromagnetische Kopplung zwischen dem ersten und dem zweiten Leiter (2, 3) beeinflusst,
**dadurch gekennzeichnet, dass** der erste und der zweite Leiter (2, 3) in einer ersten Ebene angeordnet sind und die weichmagnetische Folie (5, 6) in einer zweiten Ebene, die parallel zur ersten Ebene verläuft, angeordnet ist,
dass der erste oder der zweite Leiter (2, 3) mindestens einen Abgriff (8) aufweist und dass durch Auswertung der elektromagnetischen Kopplung in einem durch den/die Abgriff/e (8) definierten Teilabschnitt (11) die Position und/oder Positionsänderung des Messobjekts bestimmbar ist.

2. Sensoranordnung nach Anspruch 1, **dadurch gekennzeichnet, dass** der erste und der zweite Leiter (2, 3) auf einem Substrat (4) aufgebracht sind.

3. Sensoranordnung nach Anspruch 1 oder 2, **dadurch gekennzeichnet, dass** der erste Leiter und der zweite Leiter (2, 3) in einem Abstand d zueinander angeordnet sind.

4. Sensoranordnung nach Anspruch 3, **dadurch gekennzeichnet, dass** der Abstand d zwischen dem ersten und dem zweiten Leiter (2, 3) variiert ist und dass durch Variation des Abstands d vorzugsweise eine gewünschte Kennlinie des Sensors (1) eingestellt ist.

5. Sensoranordnung nach einem der Ansprüche 1 bis 4, **dadurch gekennzeichnet, dass** zur Abstimmung des Sensors (1) die Leiter (2, 3) mittels Laser getrimmt sind.

6. Sensoranordnung nach einem der Ansprüche 1 bis 5, **dadurch gekennzeichnet, dass** der erste Leiter (2) und/oder der zweite Leiter (3) gerade ausgeführt und/ oder parallel zueinander angeordnet sind.

7. Sensoranordnung nach einem der Ansprüche 1 bis 6, **dadurch gekennzeichnet, dass** der erste Leiter (2) und/oder der zweite Leiter (3) als Kurve, insbesondere als Kreisausschnitt, ausgebildet sind.

8. Sensoranordnung nach einem der Ansprüche 1 bis 7, **dadurch gekennzeichnet, dass** beidseits der beiden Leiter (2, 3) eine weichmagnetische Folie (5, 6) angeordnet ist.

9. Sensoranordnung nach einem der Ansprüche 1 bis 8, **dadurch gekennzeichnet, dass** der erste Leiter (2) zum Erzeugen eines Wechselfeldes mit einer Stromquelle verbunden ist.

10. Sensoranordnung nach einem der Ansprüche 1 bis 9, **dadurch gekennzeichnet, dass** der dem Messobjekt zugeordnete Magnet (7) ein Permanentmagnet ist oder durch eine mit Gleichstrom durchflossene Spule gebildet ist.

11. Sensoranordnung nach einem der Ansprüche 1 bis 10, **dadurch gekennzeichnet, dass** der/die Abgriff/e (8) derart an dem ersten oder dem zweiten Leiter (2, 3) angeordnet sind, dass der erste oder der zweite Leiter (2, 3) in mehrere gleich große Teilabschnitte unterteilt ist.

12. Sensoranordnung nach einem der Ansprüche 1 bis 11, **dadurch gekennzeichnet, dass** die Abgriffe (8) an dem zweiten Leiter (3) jeweils mit einem Widerstand verbunden sind, deren anderer Anschluss mit einer Summiervorrichtung verbunden sind.

13. Sensoranordnung nach einem der Ansprüche 1 bis 12, **dadurch gekennzeichnet, dass** die Abgriffe (8) an dem zweiten Leiter (3) derart verschaltet sind, dass sich die in den Teilabschnitten induzierten Spannungen in einer Nulllage des Messobjekts gegenseitig aufheben.

14. Verfahren zur Bestimmung der Position und/oder Positionsänderung eines Messobjekts relativ zu einem Sensor, insbesondere unter Verwendung einer Sensoranordnung nach einem der Ansprüche 1 bis 13, wobei dem Messobjekt ein Magnet (7) zugeordnet ist,
wobei durch ein durch einen ersten Leiter (2) des Sensors (1) fließenden Wechselstrom ein Wechselfeld erzeugt wird, das in einem längsseits des ersten Leiter (2) angeordneten zweiten Leiter (3) eine Spannung induziert,
wobei die elektromagnetische Kopplung zwischen dem ersten und dem zweiten Leiter (2, 3) durch eine weichmagnetische Folie (5, 6) beeinflusst wird, deren Permeabilität sich unter Einfluss eines Magnetfelds ändert, **dadurch gekennzeichnet, dass** der erste und der zweite Leiter (2, 3) in einer ersten Ebene angeordnet werden und die weichmagnetische Folie (5, 6) in einer zweiten Ebene, die parallel zur ersten Ebene verläuft, angeordnet wird,
dass mittels mindestens eines Abgriffs (8) an dem ersten oder dem zweiten Leiter (2, 3) mindestens zwei Teilabschnitte (11) des Leiters (2, 3) definiert werden, und dass aus der elektromagnetischen Kopplung mit einem dieser Teilabschnitte (11) auf die Position des Messobjekts geschlossen wird.

15. Verfahren nach Anspruch 14, **dadurch gekennzeichnet, dass** bei einem oder mehreren Abgriffen (8) an dem ersten Leiter (2) die einzelnen Teilabschnitte (11) nacheinander bestromt werden und/oder
dass bei einem oder mehreren Abgriffen (8) an dem zweiten Leiter (3) die einzelnen Teilabschnitte (11) nacheinander oder gleichzeitig ausgewertet werden.

## Claims

1. Sensor arrangement comprising a sensor (1) for determining the position and/or change in position of a measurement object relative to the sensor (1), a magnet (7) being assigned to the measurement object,
the sensor (1) having a first conductor (2) and a second conductor (3) arranged longitudinally to the first conductor (2),
a magnetically soft film (5, 6) being arranged in the region of influence of the first conductor and the second conductor (2, 3), the permeability of which film changes under the influence of a magnetic field and which film influences the electromagnetic coupling between the first conductor and the second conductor (2, 3),
**characterised in that** the first conductor and the second conductor (2, 3) are arranged in a first plane and the magnetically soft film (5, 6) is arranged in a second plane which is parallel to the first plane,
**in that** the first conductor or the second conductor (2, 3) has at least one tap (8), and **in that** the position and/or change in position of the measurement object can be determined by analysing the electromagnetic coupling in a portion (11) defined by the tap/s (8).

2. Sensor arrangement according to claim 1, **characterised in that** the first conductor and the second conductor (2, 3) are attached to a substrate (4).

3. Sensor arrangement according to either claim 1 or claim 2, **characterised in that** the first conductor and the second conductor (2, 3) are arranged at a distance d from one another.

4. Sensor arrangement according to claim 3, **characterised in that** the distance d between the first conductor and the second conductor (2, 3) varies, and **in that** a desired characteristic of the sensor (1) is preferably adjusted by varying the distance d.

5. Sensor arrangement according to any one of claims 1 to 4, **characterised in that** the conductors (2, 3) are trimmed by means of a laser in order to tune the sensor (1).

6. Sensor arrangement according to any one of claims 1 to 5, **characterised in that** the first conductor (2) and/or the second conductor (3) are straight and/or arranged in parallel with one another.

7. Sensor arrangement according to any one of claims 1 to 6, **characterised in that** the first conductor (2) and/or the second conductor (3) are designed as a curve, in particular as a sector of a circle.

8. Sensor arrangement according to any one of claims 1 to 7, **characterised in that** a magnetically soft film (5, 6) is arranged on both sides of the two conductors (2, 3).

9. Sensor arrangement according to any one of claims 1 to 8, **characterised in that** the first conductor (2) is connected to a power supply in order to generate an alternating field.

10. Sensor arrangement according to any one of claims 1 to 9, **characterised in that** the magnet (7) assigned to the measurement object is a permanent magnet or is formed by a coil through which a direct current flows.

11. Sensor arrangement according to any one of claims 1 to 10, **characterised in that** the tap/s (8) are arranged on the first conductor or the second conductor (2, 3) such that the first conductor or the second conductor (2, 3) is divided into multiple identically sized portions.

12. Sensor arrangement according to any one of claims 1 to 11, **characterised in that** the taps (8) on the second conductor (3) are each connected to a resistor, the other terminal of which is connected to a summation device.

13. Sensor arrangement according to any one of claims 1 to 12, **characterised in that** the taps (8) are wired to the second conductor (3) such that the voltages induced in the portions cancel one another out in a zero position of the measurement object.

14. Method for determining the position and/or change in position of a measurement object relative to a sensor, in particular using a sensor arrangement according to any one of claims 1 to 13, a magnet (7) being assigned to the measurement object,
an alternating field being generated by an alternating current flowing through a first conductor (2) of the sensor (1), which alternating field induces a voltage in a second conductor (3) arranged longitudinally to the first conductor (2),
the electromagnetic coupling between the first conductor and the second conductor (2, 3) being influenced by a magnetically soft film (5, 6), the permeability of which changes under the influence of a magnetic field,
**characterised in that** the first conductor and the second conductor (2, 3) are arranged in a first plane and the magnetically soft film (5, 6) is arranged in a second plane which is parallel to the first plane,
**in that** at least two portions (11) of the conductor (2, 3) are defined by at least one tap (8) on the first conductor or the second conductor (2, 3),
and **in that** the position of the measurement object is determined from the electromagnetic coupling with one of these portions (11).

15. Method according to claim 14, **characterised in that** the individual portions (11) are energised one after the other when the first conductor (2) has one or more taps (8) thereon, and/or
**in that** the individual portions (11) are analysed one after the other or simultaneously when the second conductor (3) has one or more taps (8) thereon.

## Revendications

1. Ensemble de capteur avec un capteur (1) destiné à déterminer la position et/ou le changement de changement de position d'un objet de mesure par rapport au capteur (1),
un aimant (7) étant affecté à l'objet de mesure,
le capteur (1) présentant un premier conducteur (2) et un deuxième conducteur (3) disposé le long du premier conducteur (2),
une feuille à magnétisme doux (5, 6) dont la perméabilité varie sous l'influence d'un champ magnétique et qui influence le couplage électromagnétique entre le premier et le deuxième conducteur (2, 3) étant disposée dans la zone d'influence du premier et du deuxième conducteur (2, 3),
**caractérisé en ce que** le premier et le deuxième conducteur (2, 3) sont disposés dans un premier plan, et la feuille à magnétisme doux (5, 6) est disposée dans un deuxième plan qui est parallèle au premier plan,
**en ce que** le premier ou le deuxième conducteur (2, 3) présente au moins une prise (8) et **en ce que**, par l'analyse du couplage électromagnétique dans un tronçon partiel (11) défini par la/les prises(s) (8), la position et/ou le changement de position de l'objet de mesure peut être défini(e).

2. Ensemble de capteur selon la revendication 1, **caractérisé en ce que** le premier et le deuxième conducteur (2, 3) sont appliqués sur un substrat (4).

3. Ensemble de capteur selon la revendication 1 ou 2, **caractérisé en ce que** le premier et le deuxième conducteur (2, 3) sont disposés à une distance d l'un de l'autre.

4. Ensemble de capteur selon la revendication 3, **caractérisé en ce que** la distance d entre le premier et le deuxième conducteur (2, 3) est modifiée et **en ce que** de préférence une courbe caractéristique souhaitée du capteur (1) est réglée par la variation de la distance d.

5. Ensemble de capteur selon l'une des revendications 1 à 4, **caractérisé en ce que** les conducteurs (2, 3) sont ajustés par laser pour procéder à l'accord du capteur (1).

6. Ensemble de capteur selon l'une des revendications 1 à 5, **caractérisé en ce que** le premier conducteur (2) et/ou le deuxième conducteur (3) sont réalisés de façon rectiligne et/ou sont disposés parallèlement entre eux.

7. Ensemble de capteur selon l'une des revendications 1 à 6, **caractérisé en ce que** le premier conducteur (2) et/ou le deuxième conducteur (3) sont constitués en tant que courbe, en particulier en tant que secteur de cercle.

8. Ensemble de capteur selon l'une des revendications 1 à 7, caractérisé en qu'une feuille à magnétisme doux (5, 6) est disposée des deux côtés des deux conducteurs (2, 3).

9. Ensemble de capteur selon l'une des revendications 1 à 8, **caractérisé en ce que** le premier conducteur (2) est raccordé à une source de courant électrique pour la production d'un champ alternatif.

10. Ensemble de capteur selon l'une des revendications 1 à 9, **caractérisé en ce que** l'aimant (7) affecté à l'objet de mesure est un aimant permanent ou est formé par une bobine parcourue par un courant continu.

11. Ensemble de capteur selon l'une des revendications 1 à 10, **caractérisé en ce que** la/les prise(s) (8) sont disposées sur le premier ou le deuxième conducteur (2, 3) de telle sorte que le premier ou le deuxième conducteur (2, 3) est divisé en plusieurs secteurs de cercle de même grandeur.

12. Ensemble de capteur selon l'une des revendications 1 à 11, **caractérisé en ce que** les prises (8) sur le deuxième conducteur (3) sont respectivement raccordées à une résistance dont les autres connexions sont raccordées à un dispositif de sommation.

13. Ensemble de capteur selon l'une des revendications 1 à 12, **caractérisé en ce que** les prises (8) sur le deuxième conducteur (3) sont branchées de telle sorte que les tensions induites dans les secteurs de cercle s'annulent réciproquement dans une position nulle de l'objet de mesure.

14. Procédé destiné à définir la position et/ou le changement de position d'un objet de mesure par rapport à un capteur, en particulier en utilisant un ensemble de capteur selon l'une des revendications 1 à 13, un aimant (7) étant affecté à l'objet de mesure,
un champ alternatif étant produit par un courant alternatif s'écoulant à travers un premier conducteur (2) du capteur (1) et induisant une tension dans un deuxième conducteur (3) disposé le long du premier conducteur (2),
le couplage électromagnétique entre le premier et le deuxième conducteur (2, 3) étant influencé par une feuille à magnétisme doux (5, 6) dont la perméabilité varie sous l'influence d'un champ magnétique, **caractérisé en ce que** le premier et le deuxième conducteur (2, 3) sont disposés dans un premier plan, et la feuille à magnétisme doux (5, 6) est disposée dans un deuxième plan qui est parallèle au premier plan,
**en ce que**, au moyen d'au moins une prise (8) sur le premier ou le deuxième conducteur (2, 3), au moins deux secteurs de cercle (11) du conducteur (2, 3) sont définis, et **en ce que** la position de l'objet de mesure est déduite à partir du couplage électromagnétique avec un de ces secteurs de cercle.

15. Procédé selon la revendication 14, **caractérisé en ce que**, en présence d'une ou de plusieurs prises (8) sur le premier conducteur (2), les différents secteurs de cercle (11) sont alimentés en courant les uns après les autres, et/ou
**en ce que**, en présence d'une ou de plusieurs prises (8) sur le deuxième conducteur (3), les différents secteurs de cercle (11) sont analysés les uns après les autres ou simultanément.
